(19) **Europäisches Patentamt / European Patent Office / Office européen des brevets**

(11) **EP 4 773 709 A1**

(12) **EUROPEAN PATENT APPLICATION**
published in accordance with Art. 153(4) EPC

(43) Date of publication:
08.07.2026 Bulletin 2026/28

(21) Application number: 24860422.5

(22) Date of filing: 29.08.2024

(51) International Patent Classification (IPC):
$H04W\ 72/566^{(2023.01)}$  $H04W\ 72/51^{(2023.01)}$
$H04W\ 4/40^{(2018.01)}$  $H04W\ 4/12^{(2009.01)}$
$H04W\ 4/38^{(2018.01)}$

(52) Cooperative Patent Classification (CPC):
H04W 24/08; H04W 24/10

(86) International application number:
PCT/KR2024/012922

(87) International publication number:
WO 2025/048503 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 KR 20230115529

(71) Applicant: LG Electronics Inc.
Yeongdeungpo-gu
Seoul 07336 (KR)

(72) Inventors:
• BYUN, Jaihyun
  Seoul 06772 (KR)
• LEE, Yoonjong
  Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **METHOD AND DEVICE FOR SETTING PRIORITY OF MESSAGE TRANSMITTER BASED ON TRACKING AND TRANSMISSION PERSISTENCE**

(57) Provided are a method for a first device to perform wireless communication and a device for supporting same. The method may comprise the steps of: sensing an object; acquiring a first transmission persistence level (TPL) value related to the object; receiving, from a second device, a first message including a second TPL value related to the object; and determining, on the basis of the first TPL value and the second TPL value, whether to transmit a second message including information related to the object.

FIG. 11

detecting an object — S1110

obtaining a first TPL value related to the object — S1120

receiving, from a second device, a first message including a second TPL value related to the object — S1130

determining whether to transmit a second message including information related to the object, based on the first TPL value and the second TPL value — S1140

# EP 4 773 709 A1

**Description**

## TECHNICAL FIELD

This disclosure relates to a wireless communication system.

## BACKGROUND ART

5G NR is a successive technology of long term evolution (LTE) corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

[Table 1]

| Per device peak data rate | 1 Tbps |
| --- | --- |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

## DISCLOSURE

## TECHNICAL SOLUTION

In one embodiment, provided is a method for performing wireless communication by a first device. The method may comprise: detecting an object; obtaining a first transmission persistence level (TPL) value related to the object; receiving, from a second device, a first message including a second TPL value related to the object; and determining whether to transmit a second message including information related to the object, based on the first TPL value and the second TPL value.

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: detecting an object; obtaining a first transmission persistence level (TPL) value related to the object; receiving, from a second device, a first message including a second TPL value related to the object; and determining whether to transmit a second message including information related to the object, based on the first TPL value and the second TPL value.

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: detecting an object; obtaining a first transmission persistence level (TPL) value related to the object; receiving, from a second device, a first message including a second TPL value related to the object; and determining whether to transmit a second message including information related to the object, based on the first TPL value and the second TPL value.

In one embodiment, provided is a non-transitory computer-readable storage medium recording instructions. For example, the instructions, based on being executed, cause a first device to perform operations comprising: detecting an object; obtaining a first transmission persistence level (TPL) value related to the object; receiving, from a second device, a first message including a second TPL value related to the object; and determining whether to transmit a second message including information related to the object, based on the first TPL value and the second TPL value.

## BRIEF DESCRIPTION OF THE DRAWINGS

FIG. 1 shows a communication structure that can be provided in the 6G system, based on an embodiment of the present disclosure.

FIG. 2 shows an electromagnetic spectrum, based on an embodiment of the present disclosure.

FIG. 3 shows an example where infrastructure equipment at intersection detects the unconnected road user and transfers it to the connected road user.

FIG. 4 shows a conventional method for transmitting a surrogate message of the plurality of connected vehicles that detect single unconnected vehicle.

FIG. 5 shows a method for transmitting a surrogate message of single transmitter that detects the unconnected vehicle at the road junction, based on an embodiment of the present disclosure.

FIG. 6 shows a method for selecting a single transmitter among the plurality of transmitters that detect the unconnected vehicle at the road junction, based on an embodiment of the present disclosure.

FIG. 7 shows a method for detecting road work information and transferring it to the peripheral road users, based on an embodiment of the present disclosure.

FIG. 8 shows a method for transferring road work information to the peripheral road users by using multi-hop, based on an embodiment of the present disclosure.

FIG. 9 shows a flow chart for determining a transmission priority based on a TPL to prevent duplicate transmission, based on an embodiment of the present disclosure.

FIG. 10 shows a method for preventing duplicate transmission of surrogate message based on a TPL, based on an embodiment of the present disclosure.

FIG. 11 shows a method for performing wireless communication by a first device, based on an embodiment of the present disclosure.

FIG. 12 shows a method for performing wireless communication by a second device, based on an embodiment of the present disclosure.

FIG. 13 shows a communication system 1, based on an embodiment of the present disclosure.

FIG. 14 shows wireless devices, based on an embodiment of the present disclosure.

FIG. 15 shows a signal process circuit for a transmission signal, based on an embodiment of the present disclosure.

FIG. 16 shows another example of a wireless device, based on an embodiment of the present disclosure.

FIG. 17 shows a hand-held device, based on an embodiment of the present disclosure.

FIG. 18 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configured or defined" may be interpreted as being configured or pre-configured to a device through pre-defined signaling (e.g., SIB, MAC, RRC) from a base station or network. In the present disclosure, "configured or defined" may be interpreted as being pre-configured to a device.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), long term evolution (LTE), 5G NR, and so on.

The technology proposed in the present disclosure may be implemented as 6G wireless technology and may be applied to various 6G systems. For example, 6G systems may have key factors such as enhanced mobile broadband (eMBB), ultra-reliable low latency communications (URLLC), massive machine-type communication (mMTC), artificial intelligence (AI) unified communications, tactile internet, high throughput, high network capacity, high energy efficiency, low backhaul and access network congestion, and enhanced data security.

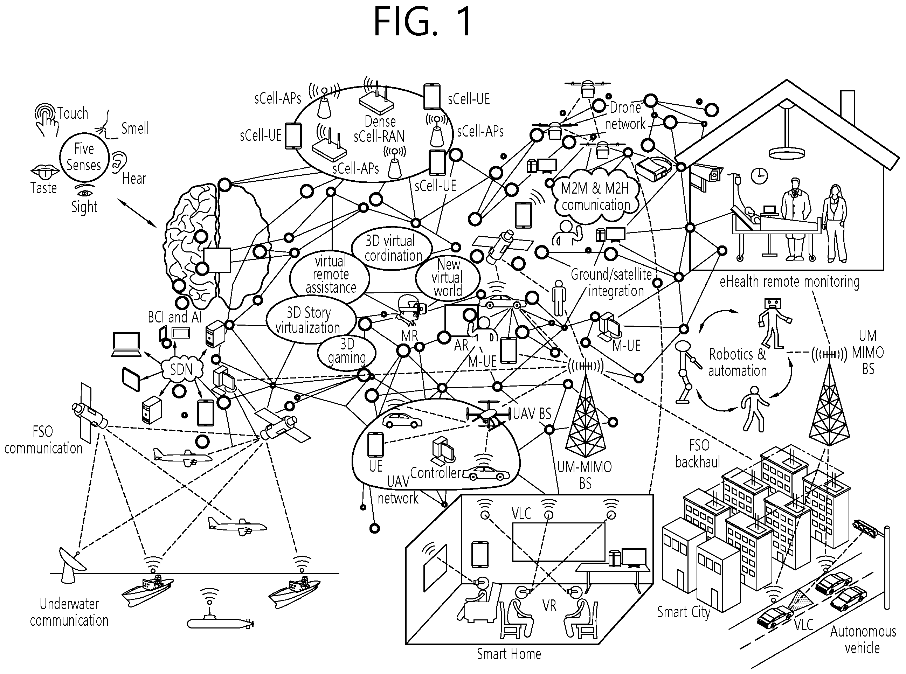

FIG. 1 shows a communication structure that can be provided in the 6G system, based on an embodiment of the present disclosure. The embodiment of FIG. 1 may be combined with various embodiments of the present disclosure.

New network characteristics in 6G may include:

- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each procedure of signal processing, which will be described below).
- Seamless integration wireless information and energy transfer
- Ubiquitous super 3D connectivity: Access to drones, networks for very low Earth orbit satellites and core network functions will create super 3D connectivity in 6G ubiquitous.

In the above new network characteristics of 6G, some general requirements may be as follows.

- Small cell networks
- Ultra-dense heterogeneous network
- High-capacity backhaul
- Radar technology integrated with mobile technology: High-precision localization (or location-based services) through communication is one of the functions of the 6G wireless communication system. Therefore, radar systems will be integrated with 6G networks.
- Softwarization and virtualization

The following describes the key enabling technologies for 6G systems.

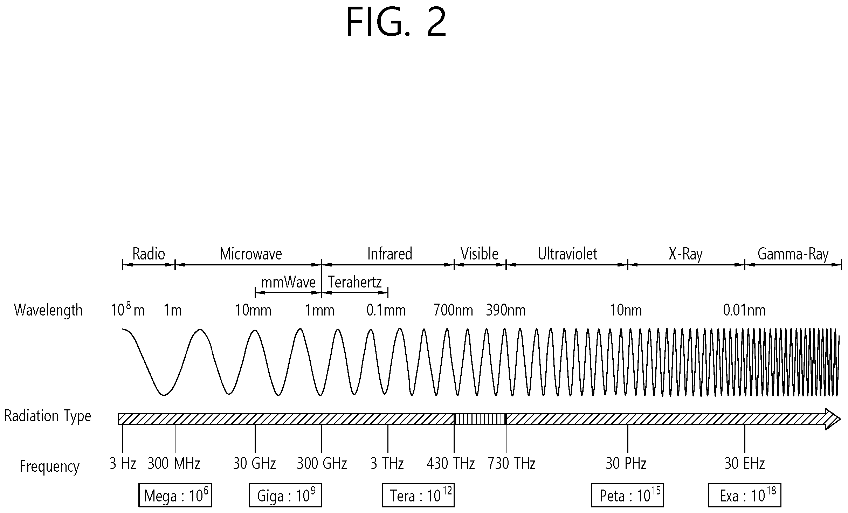

- Artificial Intelligence: The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (terahertz communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 illustrates an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.

- Large-scale MIMO Technology (Large-scale MIMO)
- Hologram Beamforming (HBF, Hologram Beamforming)
- Optical wireless technology
- Free-space optical transmission backhaul network (FSO Backhaul Network)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- Unmanned aerial vehicles (UAVs): UAVs or drones will be an important component of 6G wireless communications. In most cases, high-speed data wireless connectivity may be provided using UAV technology. Base Station (BS) entities may be installed on UAVs to provide cellular connectivity. UAVs may have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility (AAM): AAM is the parent concept of urban air mobility (UAM), which is a means of air transportation that can be used in urban centers, and can refer to a means of transportation that includes movement between urban centers and regional bases.
- Autonomous Driving (autonomous driving, self-driving): Vehicle to Everything (V2X), a key element in building an autonomous driving infrastructure, can be a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving may need to go beyond delivering warnings or guidance messages to the driver and actively intervene in vehicle operation, requiring direct control of the vehicle in dangerous situations. To do this, the amount of information that needs to be transmitted and received can be massive, so 6G is expected to maximize autonomous driving with faster transmission speeds and lower latency than 5G.

Meanwhile, although infrastructure (e.g., road side units (RSU), server, etc.) and road user (e.g., vehicle, pedestrian, etc.) capable of V2X communication are gradually appearing, it is still in the early stages of V2X diffusion, and it seems that it will take a long time until a cooperative-intelligent transportation system (C-ITS) environment consisting of perfectly connected (or equipped) road user and infrastructure is established. Until then, V2X service will be provided and used in a situation where connected road user and infrastructure, and unconnected (or unequipped) road user and infrastructure without V2X communication functions are mixed. To this end, solutions are currently being developed to recognize unconnected road user that exist between connected infrastructure and road users and integrate them into V2X services.

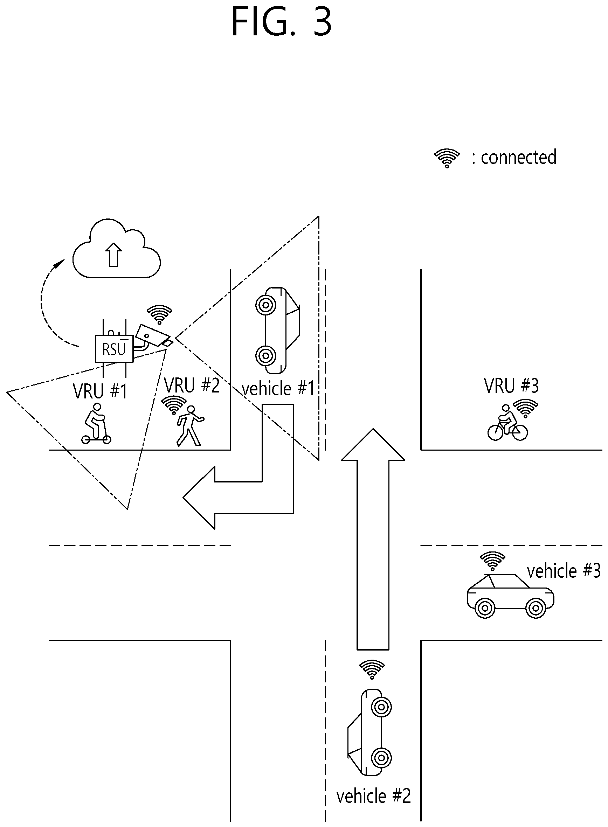

FIG. 3 shows an example where infrastructure equipment at intersection detects the unconnected road user and transfers it to the connected road user.

For example, as shown in FIG. 3, when there are connected RSU and road users (vulnerable road user (VRU) #2, VRU#3, vehicles #2, vehicle #3) at an intersection, and there are also unconnected road users (VRU#1, vehicle #1), the RSU may detect the unconnected road users (VRU#2, VRU#3, vehicle #2, vehicle #3) and provide their status information to the connected road users (VRU#2, VRU#3, vehicle #2, vehicle #3). In addition, for example, the connected road users may also detect the unconnected road users by utilizing the installed sensors and may transmit a surrogate message. Representatively, for example, there may be a service and message (e.g., SDSM (sensor data sharing message)), CPM (collective perception message)) that integrates objects detected by sensors into a single message and transmits them. In addition, for example, there may be a message (e.g., SBSM (surrogate basic safety message)) that is generated and transmitted as a surrogate/proxy for a status message of a single unconnected road user currently being standardized by SAE. For example, the service and message described above may be expressed as a surrogate message, and these messages (surrogate messages) may mean that a UE with communication capabilities (e.g., vehicle/VRU/RSU/server, etc.) generates and transmits status message (e.g., cooperative awareness message (CAM), basic safety message (BSM), VRU awareness message (VAM), personal safety message (PSM)) on behalf of a road user who does not have V2X communication equipment (unequipped), is not connected (unconnected), or has V2X communication capabilities but cannot currently transmit its status message (deactivated/unavailable).

For example, in the standard document of SBSM currently being standardized (SAE J2945/8), one vehicle may generate and transmit the BSM (basic safety message) of one unconnected road user on its behalf. In this case, when one unconnected road user is detected by a plurality of connected road users, a rule to prevent duplicate transmission of information message of road users who have detected the same thing is applied in the standard document. For example, as a method to limit duplicate transmission of surrogate status messages (e.g. SBSM) as written in the current document, if an object detected by the plurality of connected vehicles (e.g. device A, device B, and many more) that is identical or determined to be identical (since it exists within a diameter of 1.5 m) is a connected road user and it transmits its own status message (e.g., BSM) or if the detected object is an unconnected road user and a message including information about itself (e.g. SBSM) is transmitted by one connected road user (e.g., device A) transmits and this is received by another connected road user (e.g. device B), the connected road user (e.g., device B) may withhold and/or stop transmission for a certain period of time (e.g. 5 seconds in case of J2945/8) even if it detects the same unconnected road user. For example, this approach may allow connected infrastructure or road user that were previously transmitting a surrogate message to have priority for transmitting message.

Meanwhile, the contents mentioned above are described in the current standard document related to SBSM as follows.

- Limiting SBSM duplicate transmission

If the host vehicle (HV) receives a SBSM indicating an object within 1.5m diameter of location of a vehicle that the HV has detected, the HV may perform the following.

For example, the transmission of the SBSM of the detected vehicle may be delayed for 5 seconds. For example, the 5 second timer may be reset each time the SBSM on behalf of the detected vehicle is received.

For example, the transmission of SBSM on behalf of the detected vehicle may be immediately stopped for 5 seconds. For example, the 5 second timer may be reset each time the SBSM on behalf of the detected vehicle is received.

Meanwhile, the conventional message transmission method described above may be given transmission priority to the transmitter that recently transmitted the same information in order to prevent duplicate transmission of the same information when the plurality of transmitters detect/recognize/analyze the same object or information and transmit it to the peripheral UEs. This is the simplest method to prevent duplicate transmission, and may fail to consider each situation, capability of transmission candidates capable to transmit the same information. For example, when the plurality of connected road users (e.g., transmission candidates) detect a single unconnected road user and determine a single transmitter to avoid duplicate transmissions of surrogate messages (e.g., CPM, SDSM, SBSM, etc.) including information of the unconnected road user, if some transmitter has already transmitted the surrogate message of the unconnected road user to the periphery, i.e., the transmission candidate has received the message, the UE that has already transmitted the surrogate message has priority to transmit the surrogate message for the unconnected road user and may continue to transmit the surrogate message, and other candidates cannot transmit. In this case, for example, there may be limitations in providing status information of unconnected road user to connected road user due to failure to consider the relationship between unconnected road user and transmission candidates and/or the situation, capabilities, etc. of all transmission candidates.

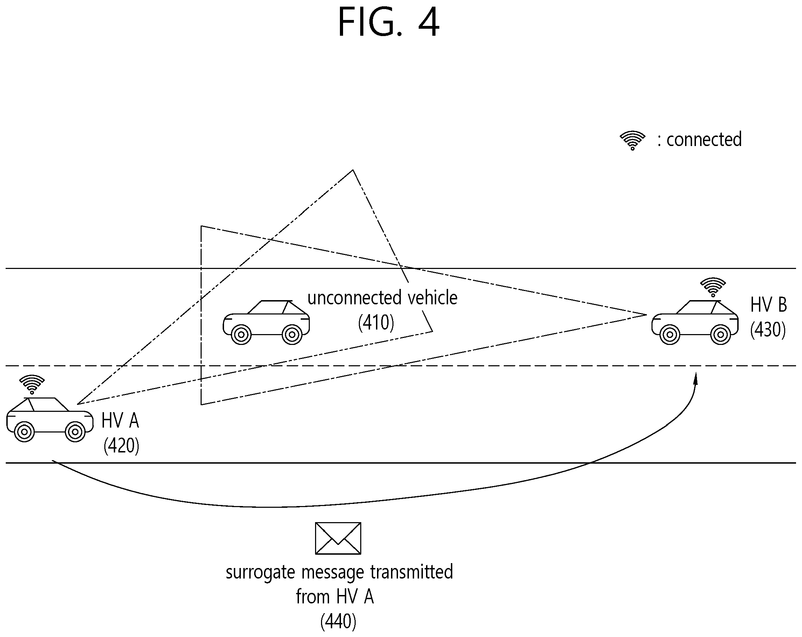

FIG. 4 shows a conventional method for transmitting a surrogate message of the plurality of connected vehicles that detect single unconnected vehicle.

For example, as shown in FIG. 4, when two connected vehicles (host vehicle (HV) A 420, host vehicle (HV) B 430) detects one unconnected vehicle 410 and the HV A 420 is already transmitting a surrogate message (e.g., SBSM) 440 including information of the unconnected vehicle, the HV B 430 must withhold or stop transmitting a surrogate message of the unconnected vehicle for 5 seconds according to the conventional transmission method. However, for example, when considering the relationship of the unconnected vehicle and the connected vehicle capable of transmitting status information of the unconnected vehicle and the situation (e.g., location, relative velocity, angle or driving lane), the HV B 430 which is driving in the same lane and in the same direction as the unconnected vehicle can detect information related to the unconnected vehicle 410 more effectively than the HV A 420 which has priority by already transmitting the surrogate message 440 of the unconnected vehicle, and can generate and transmit the surrogate message for longer period of time. For example, if the HV A 420 passes the unconnected vehicle 410 after 1 second and can no longer detect the unconnected vehicle and cannot generate and transmit the surrogate message, since the HV B 430 cannot perform transmission for 5 seconds by the current method, information of the unconnected vehicle 410 may not be provided to other connected road users for 4 seconds. That is, for example, gaps in the sharing of information related to the unconnected vehicle can occur, and other connected road users may have difficulty recognizing the unconnected vehicle, and this may pose a threat to traffic safety.

In addition, for example, in propagating information, the propagation area of the information may be expanded through multi-hop and/or relay transmission. A problem that may occur at this time is that when multi-hop and/or relay transmission are performed from a single information source, the same UE may receive duplicate information from a plurality of relay UEs after several hop/relay transmissions are performed through a plurality of relays. Even in these cases, wireless communication resources may be excessively consumed.

In the present disclosure, in a method for selecting a single or specific transmitter to avoid duplicate transmission when a plurality of transmitters can transmit same information, a method for configuring a transmission priority considering status and environment of the transmission candidate, including the correlation between information to be transmitted and the transmission candidate, and a device supporting the same are proposed. For example, the same information may refer to origin/source of information such as information obtained from the same source, information in the same context, information detected from same object. In addition, for example, the priority of message transmitter may be configured based on the sensing/recognition/analysis capability, communication/transmission capability or tracking, transmission persistence capability related to information that the transmission candidate wants to transmit. In addition, for example, when the plurality of connected infrastructures or road users detects the surrogate message of the unconnected road user and want to transmit the information of the unconnected road user to the peripheral connected road users, in a transmission method to avoid duplicate transmission, the transmitter may be selected by calculating tracking and transmission persistence, etc. of the plurality of transmission candidates. For example, the tracking and transmission persistence may be expressed in quantitative figures and may be calculated differently for each transmitter, taking into account the relationship and/or situation of the transmitter and the unconnected road user.

In the present disclosure, when the plurality of transmitters is capable to transmit/transfer the source (e.g., object, event, information, etc.) of same information, in a method for selecting a single and/or specific transmitter/sender to avoid duplicate transmission, a method for configuring a transmission priority considering status and environment of the transmission candidate, including the correlation between information to be transmitted and the transmission candidate is proposed as follows. In this case, for example, the source of the information may include information obtained by a sensor (e.g., information of the unconnected object and/or an object that do not transmit information message on its own) or event information of the road (e.g., road work information, accident information, traffic congestion information or weather information), etc. In addition, for example, the transmitter may be a generator and/or sender (e.g., the UE that receives information another source and transmits it) of the information. The elements defining the relationship between the source of the information and transmission/forwarding candidates proposed in the present disclosure may configure the priority of message transmitter based on at least one element among the sensing/recognition/analysis capability, communication/-transmission capability or tracking, transmission persistence capability of the information to be transmitted. For example, these may include capability of sensor, sensor data processing capability, communication capability (e.g., strength of communication signal), distance to the source of information, relative velocity, movement direction, detection direction, trackable time, transmission persistence time, etc.

For example, when considering a service that shares information of object/road user detected by the sensor, by selecting a single or specific transmitter among the plurality of transmission candidates that detect the same object, wireless communication resource may be saved by preventing duplicate transmission of the same information. For example, in selecting a single or specific transmitter, as a criterion for comparison, a quantitative figure/specific value (e.g., transmission persistence level/value) for configuring priority may be calculated and exchanged. For example, when the plurality of connected road users or infrastructures (e.g., server/RSU) detect information of the unconnected road user detected by sensor and want to transmit/provide the information of the unconnected road user to peripheral connected road user, in a transmission method to avoid duplicate transmission, a single transmitter may be selected by calculating and comparing specific values of the plurality of transmission candidates, taking into account the relationship between the transmission candidate and unconnected road user (e.g., the source of the information) and the situation (e.g., tracking and transmission persistence). For example, a distance between the detected unconnected road users and each transmission candidate, a relative velocity, a difference of heading direction, a difference between heading direction and detection direction of sensor, a message transmission history for the same object (e.g., number of transmissions), a type of transmission candidate (e.g., RSU, vehicle, bicycle, pedestrian), etc. may be used as specific value to configure the priority. For example, these specific values for configuring priority may be transferred to the peripheral connected infrastructure and/or road user by being included in the surrogate message of the unconnected road user, and other transmission candidates who receive this may determine whether to transmit by comparing it to their own specific value. For example, when the connected vehicle detects an object with its sensor and does not receive a message including information of the detected object, it may transmit the object information and the specific value for configuring its own priority together. For example, referring to FIG. 4 described above, if the connected road user (the HV A 420 in FIG. 4) is in the process of transmitting a message (e.g., SBSM) (the surrogate message 440 transmitted from the HV A in FIG. 4) including information of the unconnected road user (the unconnected vehicle 410 in FIG. 4) and specific value, another connected road user (the HV B 430 in FIG. 4) that detects the same unconnected road user (the unconnected road user 410 in FIG. 4) may determine whether to transmit by comparing a specific value of transmitter (the HV A 420 in FIG. 4) who has already transmitted with its own (the HV B 430 in FIG. 4) specific value before transmitting the surrogate message of the unconnected road user. For example, if its own (the HV B 430 in FIG. 4) specific value is higher (or lower) than the specific value of transmitter (the HV A 420 in FIG. 4) who has already transmitted, transmission may be stopped, and conversely, if it is lower (or higher) than the specific value of transmitter (the HV A 420 in FIG. 4), transmission may be performed. For example, the specific value for configuring a priority of the transmission candidate (x) may be calculated as follow. For example, the specific value may be interpreted as being replaced with transmission persistence level (TPL), and a function for calculating a TPL of transmission candidate (x) may be as shown in function equation 1 below.

$$\text{TPL} = a \times \text{distance} + b \times \text{relative velocity} + c \times \text{heading difference} + d \times \text{angle between heading and direction of detection} + e / (\text{message counter} + 1) + f \times \text{type of transmission candidate} \qquad \text{[function equation 1]}$$

For example, a, b, c, d, e and f in the above function equation 1 are coefficients that may be configured in various ways for each service or message. In addition, for example, the distance may mean a distance between the source of information and the transmission candidate, the relative velocity may mean a relative velocity between the source of information and the transmission candidate, and the heading difference may mean a difference between the moving direction of the source of information and the moving direction of the transmission candidate. For example, if there is one that is close to the detected object and is moving in the same direction at a similar velocity among a plurality of transmission candidates, it may be selected as a single transmitter with high priority. For example, the angle between heading and direction of detection may mean a difference between the direction in which the transmission candidate senses/views the source of information and the direction in which it is moving. For example, if the source of information is the unconnected vehicle, this value may be calculated as low when the transmission candidate is driving in the same driving lane and/or driving path, or this value may be calculated as high when it is driving in a different driving lane and/or driving path (e.g., the unconnected vehicle is turning left, the transmission candidate is turning right). For example, the message counter may mean the number of times a message has been transmitted (e.g., MSGCount) to take into account the previous transmission history of the message for the source of the information. That is, for example, among transmission candidates in similar environments, a transmission candidate with a previous transmission history may transmit information continuously. That is, among the transmission candidates in a similar environment, a transmission candidate with a previous transmission history may transmit information continuously. For example, the type of transmission candidate may mean a type of transmission candidate, and the type of transmission candidate may be configured to a specific value for each type as an element that can consider the characteristics of the transmitter. For example, if an infrastructure (e.g., server/RSU) superior in sensor performance, communication capability, etc. is a transmission candidate, a bonus point may be given to a specific value for configuring the transmission priority. For example, by configuring the value of infrastructure as '1', vehicle as '5', and pedestrian as '9', the infrastructure (e.g., server/RSU) may be given a higher transmission priority (with a lower value) than the vehicle or the pedestrian. In addition, for example, the vehicle may be given a higher transmission priority (with a lower value) than the pedestrian. For example, the selection of a single transmitter among the plurality of transmission candidates of a single object detected by the sensor described above is one example, and the contents proposed in the present disclosure may be applied when it is necessary to limit or control duplicate transmission among other V2X services or when a single or specific transmitter must be selected. For example, multi-hop or relaying may be utilized among V2X services to expand information diffusion or communication range. In this case, for example, it may result in duplicate transmitting of the same information through a plurality of relay UEs. In this case, for example, priority configuration may be performed to select a single or specific transmitter/sender among a plurality of transmission/relay candidates by considering the relationship between the source of information and transmission/forwarding candidate and situation, etc. proposed in the present disclosure.

The method proposed in the present disclosure may be performed as in the embodiment(s) described below together with the SBSM duplicate transmission limiting method of the surrogate V2V (vehicle-to-vehicle) safety communications service among the contents of the SAE standard (J2945/8) which is in the process of standardization.

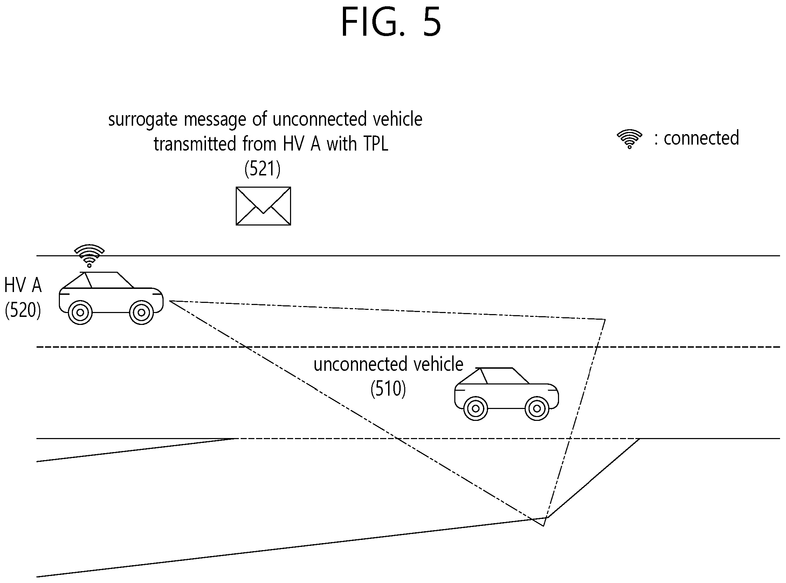

FIG. 5 shows a method for transmitting a surrogate message of single transmitter that detects the unconnected vehicle at the road junction, based on an embodiment of the present disclosure. The embodiment of FIG. 5 may be combined with various embodiments of the present disclosure.

Referring to FIG. 5, when a connected vehicle (HV A) 520 that detects an unconnected vehicle 510 attempts to transmit a message (e.g., SBSM) 521 including information (e.g., location, speed, direction, etc.) of the unconnected vehicle, it may check whether there is a message including information of the same vehicle or a vehicle determined to be the same vehicle. For example, if there is no received message, the HV A 520 may calculate the transmission persistence level (TPL) described as an example in this disclosure and transmit it together with the information of the unconnected vehicle. For example, the transmission persistence level (TPL) of HV A 520 for the unconnected vehicle 510 may be calculated as follows.

$$f(HV\ A, t0) = 0.5 \times 20[m] + 0.5 \times 1[m/s] + 0.03 \times 0[deg] + 0.03 \times 30[deg] + 0.01 / (0+1) + 1 \times 5 = 16.41$$

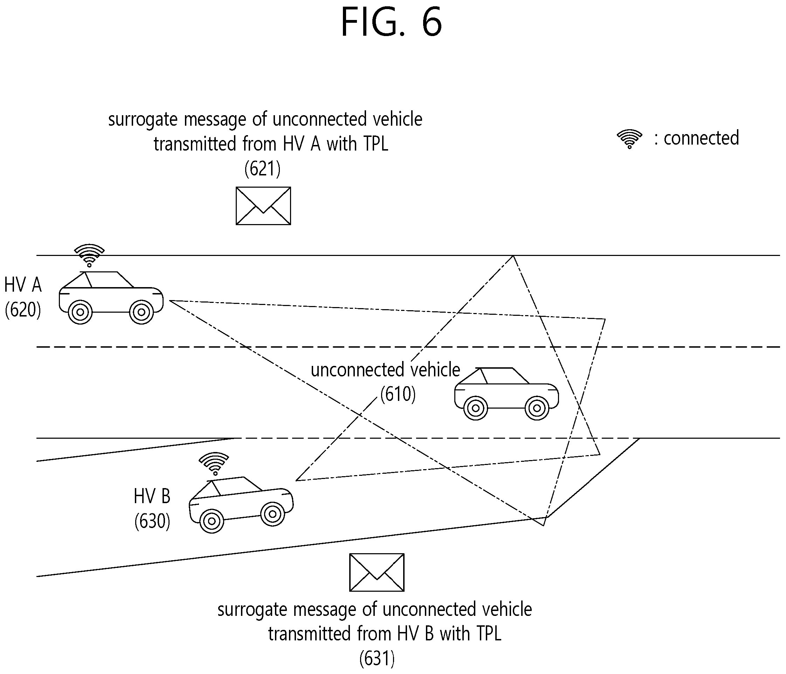

FIG. 6 shows a method for selecting a single transmitter among the plurality of transmitters that detect the unconnected vehicle at the road junction, based on an embodiment of the present disclosure. The embodiment of FIG. 6 may be combined with various embodiments of the present disclosure.

Referring to FIG. 6, a situation illustrated in FIG. 6 may be a subsequent situation (e.g., time t1) of the situation illustrated in FIG. 5 described above (e.g., time t0). For example, a connected vehicle (HV A 620) that detects an unconnected vehicle 610 may calculate its own (HV A 620) TPL and may transmit it to periphral road user along with information about the unconnected vehicle. For example, in this situation, the connected vehicle (HV B 630) that detects an unconnected vehicle 610 may receive a surrogate message (e.g., SBSM) and a transmission persistence level (TPL) 621 from the transmitter that has already transmitted (HV A 620) when joining the on-ramp. For example, before detecting the unconnected vehicle 610 and transmitting a surrogate message of the unconnected vehicle, HV B 630 may calculate its own transmission persistence level (TPL) and may determine whether to transmit by comparing it with TPL of the transmitter that has already transmitted (e.g., HV A 620). For example, the transmission persistence level (TPL) of the connected vehicles (HV A 620, HV B 630) at that time may be calculated as follows, respectively.

$$f(HV\ A, t1) = 0.5 \times 20[m] + 0.5 \times 1[m/s] + 0.03 \times 0[deg] + 0.03 \times 30[deg] + 0.01 / (1+1) + 1 \times 5 = 16.45$$

$$f(HV\ B, t1) = 0.5 \times 10[m] + 0.5 \times 5[m/s] + 0.03 \times 10[deg] + 0.03 \times 0[deg] + 0.01 / (0+1) + 1 \times 5 = 12.81$$

In this case, for example, the HV B 630 may check that its own transmission persistence level (TPL) is lower than the transmission persistence level (TPL) of the HV A 620, and may transmit information message 631 of the unconnected vehicle. For example, after receiving the information message (e.g., SBSM) and the transmission persistence level (TPL) 631 of the unconnected vehicle of the HV B 630, the HV A 620 may check that its own transmission persistence level (TPL) is higher than the transmission persistence level (TPL) of the HV B 630, and then the HV A 620 may stop transmitting the information message of the unconnected vehicle.

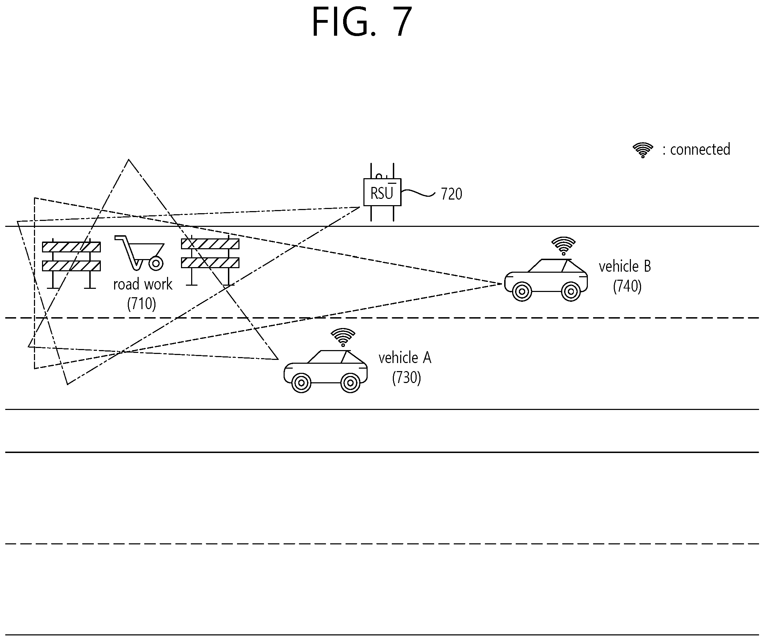

FIG. 7 shows a method for detecting road work information and transferring it to the peripheral road users, based on an embodiment of the present disclosure. The embodiment of FIG. 7 may be combined with various embodiments of the present disclosure.

Referring to FIG. 7, a service that detects construction information on a road and transmits it to peripheral road user as a V2X message (e.g., road side alert (RSA), road safety message (RSM), basic safety message (BSM) part 2, decentralized environmental notification message (DENM)) among services that inform road information is illustrated. For example, in FIG. 7, when vehicle A 730, vehicle B 740 and RSU 720 detect/recognize road work (710) and transmit the message to the peripheral road user, a single transmitter may be selected to avoid duplicate transmission. In this case, for example, when selecting the single transmitter by calculating a specific value for priority configuration proposed in the present disclosure, the transmission persistence level (TPL) may be calculated as follows.

$$f(RSU, t0) = 0.5 \times 10[m] + 0.5 \times 0[m/s] + 0.03 \times 0[deg] + 0.03 \times 30[deg] + 0.01 / (0+1) + 1 \times 1 = 6.91$$

$$f(vehicle\ A, t0) = 0.5 \times 10[m] + 0.5 \times 5[m/s] + 0.03 \times 0[deg] + 0.03 \times 30[deg] + 0.01 / (0+1) + 1 \times 5 = 13.41$$

$$f(vehicle\ B, t0) = 0.5 \times 20[m] + 0.5 \times 5[m/s] + 0.03 \times 0[deg] + 0.03 \times 0[deg] + 0.01 / (0+1) + 1 \times 5 = 17.51$$

In the example of the above calculation, the type of the transmission candidate (e.g., RSU=1, vehicle=5) may be reflected in the value of the transmission persistence level (TPL), which allows the RSU to be selected as a single transmitter.

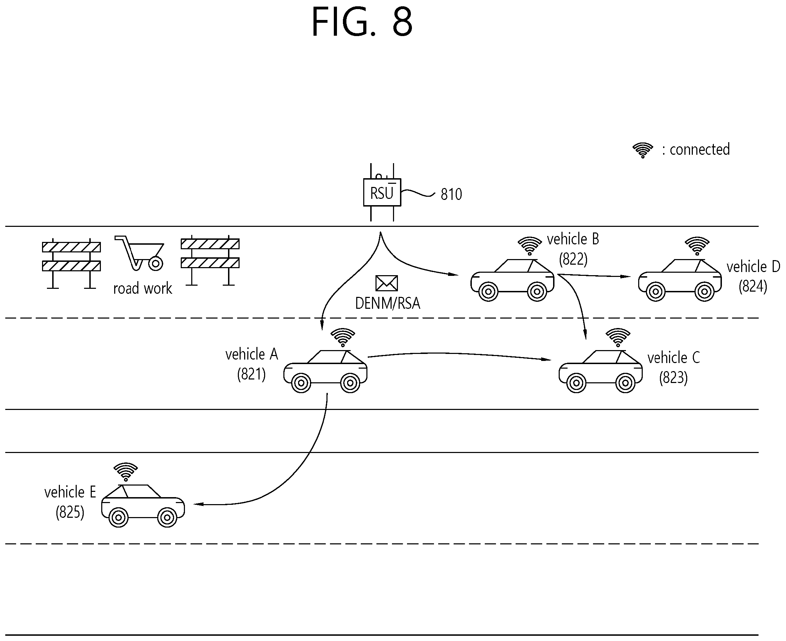

FIG. 8 shows a method for transferring road work information to the peripheral road users by using multi-hop, based on an embodiment of the present disclosure. The embodiment of FIG. 8 may be combined with various embodiments of the present disclosure.

Referring to FIG. 8, when a message (e.g., DENM/RSA) transmitted by RSU 810 is transmitted to peripheral road users (vehicle A 821, vehicle B 822) in multi-hop to expand the propagation range, it may be necessary to select a specific transmitter instead of all transmitters considering wireless communication resources. For example, as shown in FIG. 8, after RSU 810 transmits information (e.g., DENM/RSA) to road users (vehicle A 821, vehicle B 822) within the communication range, the road users (vehicle A 821, vehicle B 822) that received the information may transmit the same information to peripheral road users (e.g., vehicle A 821 transmits it to vehicle C 823 and vehicle E 825, vehicle B 822 transmits it to vehicle C 823 and vehicle D 824) to expand the propagation range of the information. In this case, for example, when a specific or single relay must be selected due to constraints in wireless communication resources, a specific value for selecting a transmitter may be calculated by considering the relationship between the source of information and the relay and situation proposed in the present disclosure. For example, when the embodiment of the transmission persistence level (TPL) described above is applied, the vehicle B 822 may be given transmission priority, and the vehicle C 823 and vehicle D 824 may receive the same information through the propagation of information. For example, this is more efficient and continuous information transmission than the vehicle A 821 is selected as a transmitter/sender and transmits information to the vehicle C 823 and the vehicle E 825.

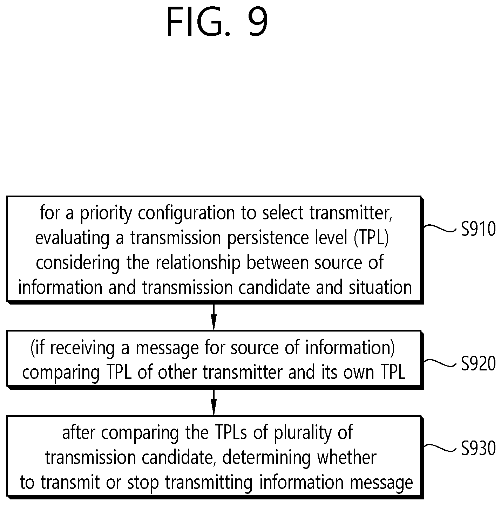

FIG. 9 shows a flow chart for determining a transmission priority based on a TPL to prevent duplicate transmission, based on an embodiment of the present disclosure. The embodiment of FIG. 9 may be combined with various embodiments of the present disclosure.

Referring to FIG. 9, In step S910, the plurality of transmission candidates may evaluate transmission persistence level (TPL) considering the relationship between the source of information and each transmission candidate and situation for configuring a priority for transmitter selection. In step S920, if each of the plurality of transmission candidates receives a message about the source of information from other transmission candidate(s), each of the plurality of transmission candidates may compare its own transmission persistence level (TPL) with the TPL of the other transmission candidate(s). In step S930, after comparing the transmission persistence level (TPL) of the plurality of transmission candidates, each of the plurality of transmission candidates may determine whether to transmit the information message or stop transmitting.

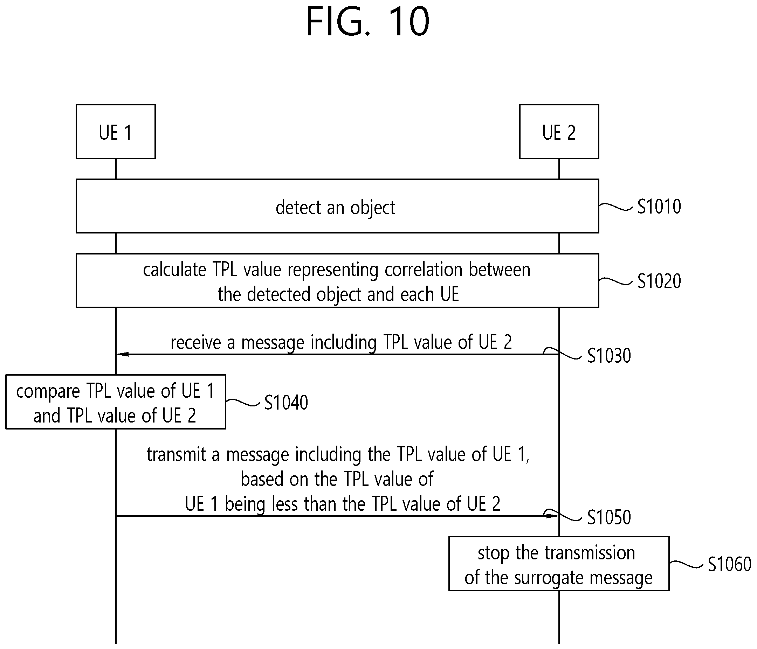

FIG. 10 shows a method for preventing duplicate transmission of surrogate message based on a TPL, based on an embodiment of the present disclosure. The embodiment of FIG. 10 may be combined with various embodiments of the present disclosure.

Referring to FIG. 10, UE 1 and UE 2 may be connected (or equipped) UEs (e.g., road user or RSU, etc.). In step S1010, the UE 1 may detect an object on the road (or a situation on the road), and the UE 2 located around the UE 1 may also detect the same object on the road (or a situation on the road) detected by the UE 1. For example, the object on the same road detected by the UE 1 and the UE 2 may be an unconnected (or unequipped) UE (e.g., a road user) (or, the situation on the same road detected by the UE 1 and the UE 2 may be a road construction, a traffic accident, a traffic jam, weather, etc.). On the other hand, if the object detected by the UE 1 and the UE 2 is the unconnected UE, the object does not have the ability to transmit information related to itself to the peripheral road users (e.g., the UE 1 or the UE 2), so the UE 1 or the UE 2 around the object may transmit information related to the object on behalf of the object. In step S1020, each of the UE 1 and the UE 2 may calculate a transmission persistence level (TPL) value representing a correlation between the detected object and itself. For example, the TPL value may represent the tracking capability for the detected object or the persistence capability of information transmission for the detected object of each of the UE 1 and the UE 2. For example, even if the UE 1 and the UE 2 detect the same object, there may be differences in sensor performance, data processing capability, communication performance, distance to the detected object, movement direction, etc. of the UE 1 and the UE 2, so the TPL value of the UE 1 for the object calculated by the UE 1 and the TPL value of the UE 2 for the object calculated by the UE 2 may be different from each other. For example, each of the UE 1 and the UE 2 may calculate the TPL value based on the function equation 1 described above. In step S1030, the UE 2 may transmit a message including its own TPL value to the UE 1 which is a peripheral transmission candidate. For example, the message including the TPL value of the UE 2 may be a surrogate basic safety message (SBSM) including information related to the object detected by the UE 2. In step S1040, the UE 1 may know that the UE 1 and the UE 2 detected the same object based on the information included in the message received in step S1030 described above, and the UE 1 can compare its own TPL value calculated in step S1020 described above with the TPL value of the UE 2 included in the message received in step S1030 described above in order to prevent duplicate transmission of surrogate message for the object. For example, the UE 1 may determine whether to transmit a new message including information related to the detected object, based on comparing the TPL value of the UE 1 with the TPL value of the UE 2. That is, for example, if the message including information related to the object received by the UE 1 from the UE 2 is a surrogate message including information related to the object at time t0, the UE 1 may determine whether to transmit a surrogate message including information related to an object at time t1 after time t0 by comparing the TPL values. In step S1050, the UE 1 may transmit a new message including information related to the object to the UE 2, based on the TPL value of the UE 1 being less than the TPL value of the UE 2. In this case, for example, the UE 1 may include the TPL value of the UE 1 in the new message and transmit it to the UE 2. That is, for example, the UE 1 may determine that its tracking capability for the object or its persistence capability of information transmission for the object is superior to that of the UE 2, based on the TPL value of the UE 1 being less than the TPL value of the UE 2. And, the UE 1 may determine that the priority related to transmitting the surrogate message including information related to the detected object is higher than that of the UE 2. Therefore, the UE 1 may transmit the new surrogate message including the TPL value of the UE 1 and information related to the detected object to the UE 2. In step S1060, the UE 2 receiving the message from the UE 1 may stop transmitting the surrogate message including information related to the detected object. For example, the UE 2 may know that its own TPL value is greater than the TPL value of the UE 1, based on the TPL value of the UE 1 included in the message transmitted from the UE 1 in step S1050 described above. That is, for example, the UE 2 may determine that its tracking capability for the object or its persistence capability of information transmission for the object is not superior to that of UE 1, based on the TPL value of the UE 2 is greater than the TPL value of the UE 1. And, the UE 2 may determine that the priority related to transmitting the surrogate message including information related to the detected object is lower than that of UE 1. Therefore, even if the UE 2 can detect the object and analyze information related to the object, it may stop transmitting the surrogate message including information related to the object.

According to various embodiments of the present disclosure, by configuring the priority of message transmitter based on tracking and transmission persistence, duplicate transmission may be effectively prevented and wireless communication resources may be used efficiently. In addition, for example, a transmitter that can effectively detect/recognize/analyze the information to be transmitted and continuously transmit the information may be selected. For example, when generating information by detecting a moving object with a sensor and transmitting it, it is advantageous that a transmission candidate with a superior environment for detecting the object transmits the object information in that good quality information can be provided. In this case, for example, high-level information may be provided to peripheral UEs to improve traffic safety and flow. In addition, for example, wireless communication resources may be effectively used by selecting a single or specific transmitter to avoid duplicate transmission. In addition, for example, as an effect of the surrogate message transmission method proposed in the present disclosure, by continuously transmitting the surrogate message including information of the unconnected road user, the gap of the surrogate message may be minimized, and by continuously transmitting detailed information, the peripheral connected infrastructure or road users may more effectively recognize the unconnected road user. In this case, for example, the quality of V2X service may be improved, thereby improving traffic safety and efficiency.

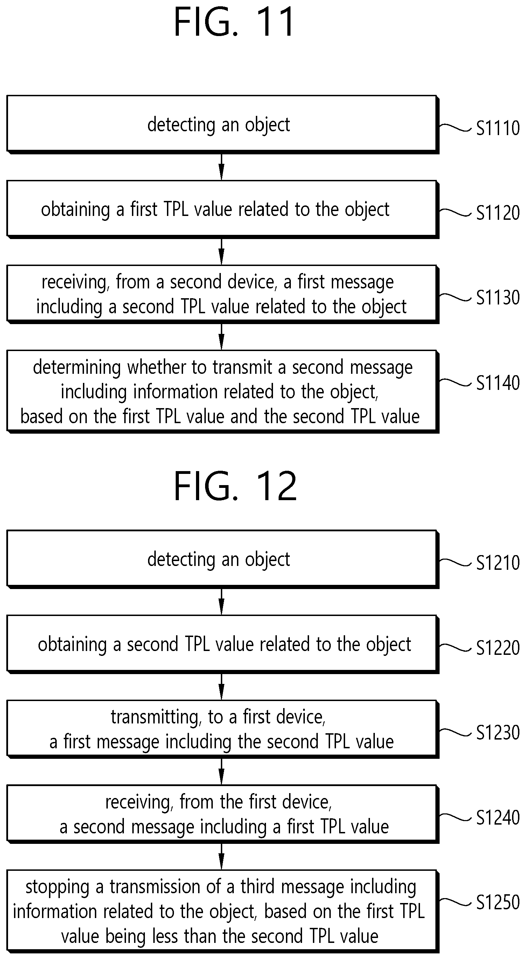

FIG. 11 shows a method for performing wireless communication by a first device, based on an embodiment of the present disclosure. The embodiment of FIG. 11 may be combined with various embodiments of the present disclosure.

Referring to FIG. 11, In step S1110, a first device may detect an object. In step S1120, the first device may obtain a first transmission persistence level (TPL) value related to the object. In step S1130, the first device may receive, from a second device, a first message including a second TPL value related to the object. In step S1140, the first device may determine whether to transmit a second message including information related to the object, based on the first TPL value and the second TPL value.

For example, whether to transmit the second message may be determined based on a comparison of the first TPL value with the second TPL value.

For example, the first TPL value may be obtained based on a correlation between the first device and the object. And, for example, the second TPL value may be obtained based on a correlation between the second device and the object.

For example, the first TPL value may be obtained based on a distance between the first device and the object.

For example, the first TPL value may be obtained based on a relative velocity between the first device and the object. That is, for example, the first TPL value may be obtained based on the relative velocity of the first device with respect to the object.

For example, the first TPL value may be obtained based on a heading difference between the first device and the object. That is, for example, the first TPL value may be obtained based on difference between a heading direction of the first device and a heading direction of objection.

For example, the first TPL value may be obtained based on an angle between heading and direction of detection between the first device and the object. That is, for example, the first TPL value is obtained based on the angle between the heading direction of the first device and a detection direction with respect to the object.

For example, the first TPL value may be obtained based on a message count of the first device. That is, for example, the first TPL value is determined based on the number of times the first device has transmitted a message related to the object, before it is determined whether to transmit the second message.

For example, the first TPL value may be obtained based on a type of the first device.

For example, the first TPL value may be obtained by summing all of (i) a value determined based on a distance between the first device and the object, multiplied by a first coefficient, (ii) a value determined based on a relative velocity between the first device and the object, multiplied by a second coefficient, (iii) a value determined based on a heading difference between the first device and the object, multiplied by a third coefficient, (iv) a value determined based on an angle between the heading and the direction of detection between the first device and the object, multiplied by a fourth coefficient, (v) a value obtained by dividing a fifth coefficient by the sum of a message count of the first device and 1, and (vi) a value determined based on a type of the first device, multiplied by a sixth coefficient.

For example, the second message including the firsts TPL value may be transmitted, based on the first TPL value being less than the second TPL value.

For example, a transmission of a third message including the information related to the object by the second device may be stopped, based on the second message including the first TPL value less than the second TPL value being transmitted to the second device.

For example, a transmission of the second message by the first device may be stopped, based on the first TPL value being greater than the second TPL value.

The proposed method may be applied to devices according to various embodiments of the present disclosure. First, a processor 102 of a first device 100 may detect an object. And, the processor 102 of the first device 100 may obtain a first transmission persistence level (TPL) value related to the object. And, the processor 102 of the first device 100 may control a transceiver 106 to receive, from a second device, a first message including a second TPL value related to the object. And, the processor 102 of the first device 100 may determine whether to transmit a second message including information related to the object, based on the first TPL value and the second TPL value.

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: detecting an object; obtaining a first transmission persistence level (TPL) value related to the object; receiving, from a second device, a first message including a second TPL value related to the object; and determining whether to transmit a second message including information related to the object, based on the first TPL value and the second TPL value.

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: detecting an object; obtaining a first transmission persistence level (TPL) value related to the object; receiving, from a second device, a first message including a second TPL value related to the object; and determining whether to transmit a second message including information related to the object, based on the first TPL value and the second TPL value.

According to one embodiment of the present disclosure, provided is a non-transitory computer-readable storage medium recording instructions. For example, the instructions, based on being executed, cause a first device to perform operations comprising: detecting an object; obtaining a first transmission persistence level (TPL) value related to the object; receiving, from a second device, a first message including a second TPL value related to the object; and determining whether to transmit a second message including information related to the object, based on the first TPL value and the second TPL value.

FIG. 12 shows a method for performing wireless communication by a second device, based on an embodiment of the present disclosure. The embodiment of FIG. 12 may be combined with various embodiments of the present disclosure.

Referring to FIG. 12, In step S1210, a second device may detect an object. In step S1220, the second device may obtain a second transmission persistence level (TPL) value related to the object. In step S1230, the second device may transmit, to a first device, a first message including the second TPL value. In step S1240, the second device may receive, from the first device, a second message including a first TPL value. In step S 1250, the second device may stop a transmission of a third message including information related to the object, based on the first TPL value being less than the second TPL value.

The proposed method may be applied to devices according to various embodiments of the present disclosure. First, a processor 202 of a second device 200 may detect an object. And, the processor 202 of the second device 200 may obtain a second transmission persistence level (TPL) value related to the object. And, the processor 202 of the second device 200 may control a transceiver 206 to transmit, to a first device, a first message including the second TPL value. And, the processor 202 of the second device 200 may control the transceiver 206 to receive, from the first device, a second message including a first TPL value. And, the processor 202 of the second device 200 may control the transceiver 206 to stop a transmission of a third message including information related to the object, based on the first TPL value being less than the second TPL value.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: detecting an object; obtaining a second transmission persistence level (TPL) value related to the object; transmitting, to a first device, a first message including the second TPL value; receiving, from the first device, a second message including a first TPL value; and stopping a transmission of a third message including information related to the object, based on the first TPL value being less than the second TPL value.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: detecting an object; obtaining a second transmission persistence level (TPL) value related to the object; transmitting, to a first device, a first message including the second TPL value; receiving, from the first device, a second message including a first TPL value; and stopping a transmission of a third message including information related to the object, based on the first TPL value being less than the second TPL value.

According to one embodiment of the present disclosure, provided is a non-transitory computer-readable storage medium recording instructions. For example, the instructions, based on being executed, cause a second device to perform operations comprising: detecting an object; obtaining a second transmission persistence level (TPL) value related to the object; transmitting, to a first device, a first message including the second TPL value; receiving, from the first device, a second message including a first TPL value; and stopping a transmission of a third message including information related to the object, based on the first TPL value being less than the second TPL value.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

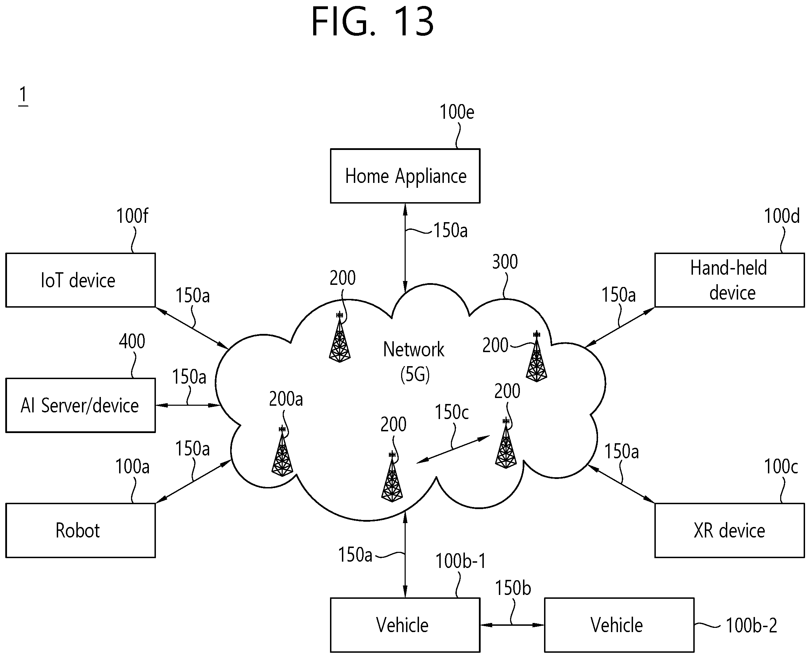

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

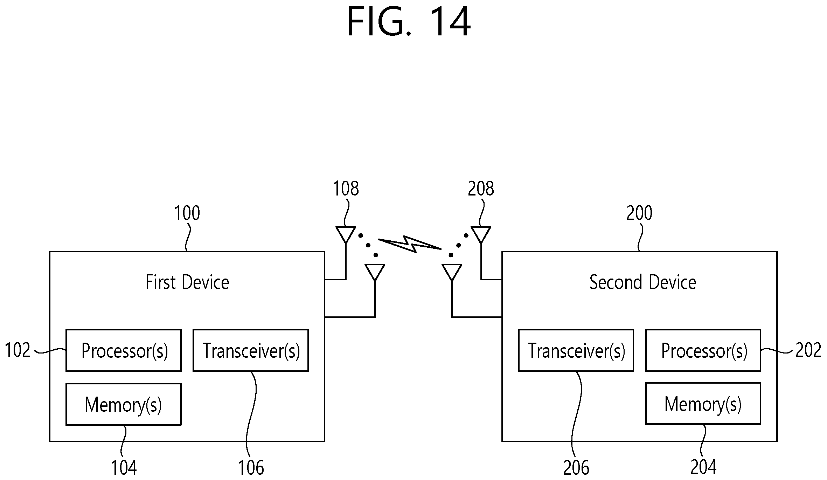

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

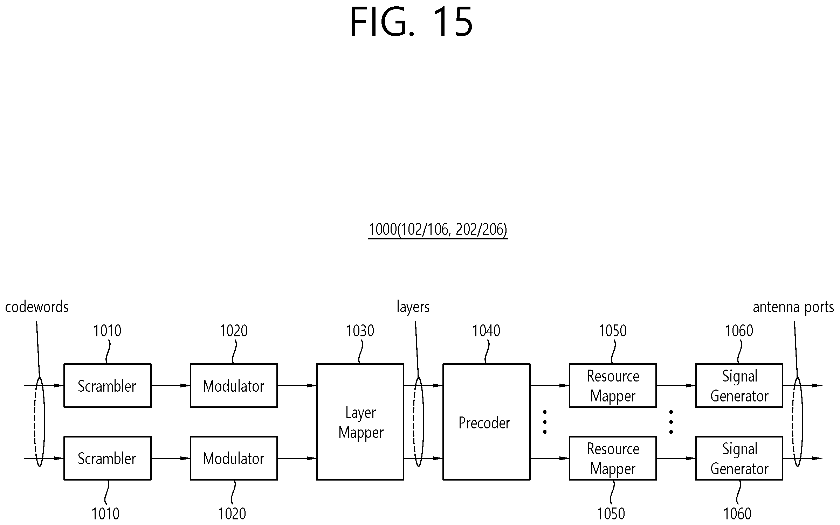

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

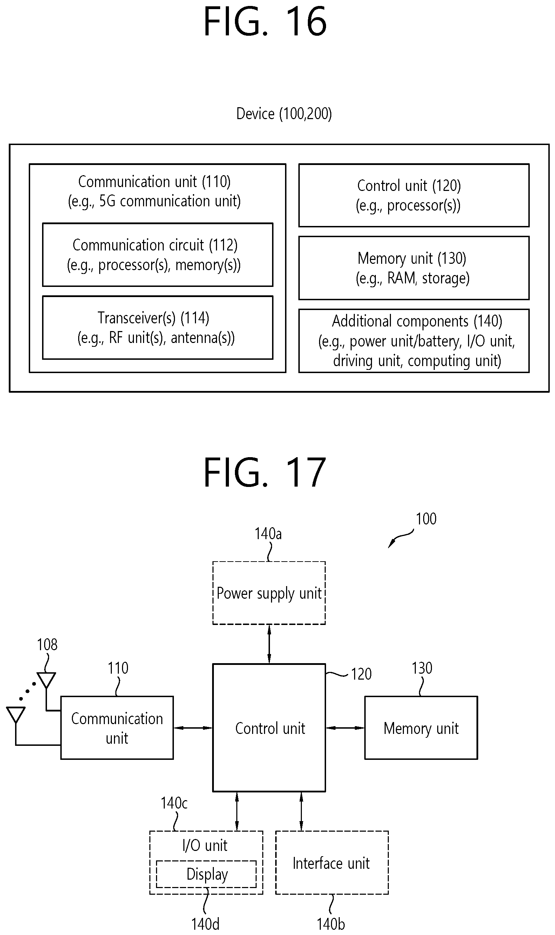

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

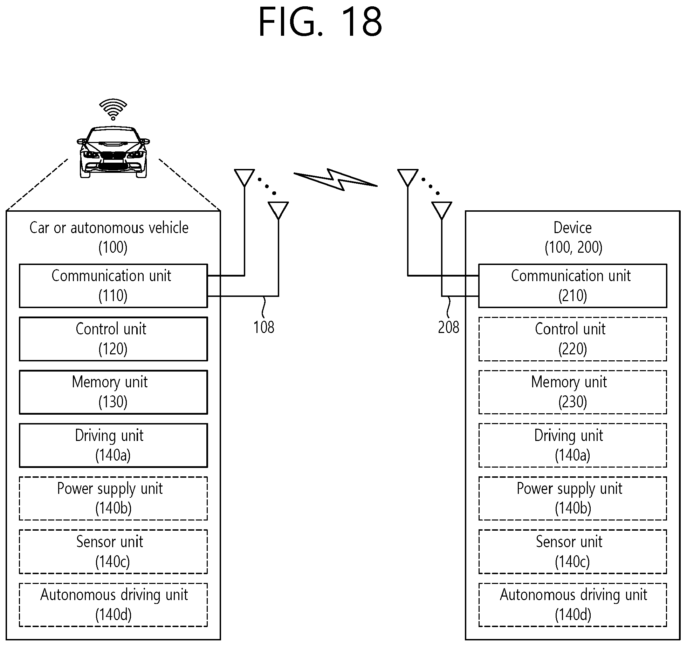

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:

   detecting an object;
   obtaining a first transmission persistence level (TPL) value related to the object;
   receiving, from a second device, a first message including a second TPL value related to the object; and
   determining whether to transmit a second message including information related to the object, based on the first TPL value and the second TPL value.

2. The method of claim 1, wherein whether to transmit the second message is determined based on a comparison of the first TPL value with the second TPL value.

3. The method of claim 1, wherein the first TPL value is obtained based on a correlation between the first device and the object, and
   wherein the second TPL value is obtained based on a correlation between the second device and the object.

4. The method of claim 1, wherein the first TPL value is obtained based on a distance between the first device and the object.

5. The method of claim 1, wherein the first TPL value is obtained based on a relative velocity between the first device and the object.

6. The method of claim 1, wherein the first TPL value is obtained based on a heading difference between the first device and the object.

7. The method of claim 1, wherein the first TPL value is obtained based on an angle between heading and direction of detection between the first device and the object.

8. The method of claim 1, wherein the first TPL value is obtained based on a message count of the first device.

9. The method of claim 1, wherein the first TPL value is obtained based on a type of the first device.

10. The method of claim 1, wherein the first TPL value is obtained by summing all of (i) a value determined based on a distance between the first device and the object, multiplied by a first coefficient, (ii) a value determined based on a relative velocity between the first device and the object, multiplied by a second coefficient, (iii) a value determined based on a heading difference between the first device and the object, multiplied by a third coefficient, (iv) a value determined based on an angle between the heading and the direction of detection between the first device and the object, multiplied by a fourth coefficient, (v) a value obtained by dividing a fifth coefficient by the sum of a message count of the first device and 1, and (vi) a value determined based on a type of the first device, multiplied by a sixth coefficient.

11. The method of claim 1, wherein the second message including the firsts TPL value is transmitted, based on the first TPL value being less than the second TPL value.

12. The method of claim 1, wherein a transmission of a third message including the information related to the object by the second device is stopped, based on the second message including the first TPL value less than the second TPL value being transmitted to the second device.

13. The method of claim 1, wherein a transmission of the second message by the first device is stopped, based on the first TPL value being greater than the second TPL value.

14. A first device adapted to perform wireless communication, the first device comprising:

at least one transceiver;
at least one processor; and
at least one memory connected to the at least one processor and storing instructions that, based on being executed, cause the first device to perform operations comprising:

detecting an object;
obtaining a first transmission persistence level (TPL) value related to the object;
receiving, from a second device, a first message including a second TPL value related to the object; and
determining whether to transmit a second message including information related to the object, based on the first TPL value and the second TPL value.

15. A processing device adapted to control a first device to perform wireless communication, the processing device comprising:

at least one processor; and
at least one memory connected to the at least one processor and storing instructions that, based on being executed, cause the at least one processor to perform operations comprising:

detecting an object;
obtaining a first transmission persistence level (TPL) value related to the object;
receiving, from a second device, a first message including a second TPL value related to the object; and
determining whether to transmit a second message including information related to the object, based on the first TPL value and the second TPL value.

16. A non-transitory computer-readable storage medium recording instructions, the instruction, when executed, cause a first device to perform operations comprising:

detecting an object;
obtaining a first transmission persistence level (TPL) value related to the object;
receiving, from a second device, a first message including a second TPL value related to the object; and
determining whether to transmit a second message including information related to the object, based on the first TPL value and the second TPL value.

17. A method for performing wireless communication by a second device, the method comprising:

detecting an object;
obtaining a second transmission persistence level (TPL) value related to the object;
transmitting, to a first device, a first message including the second TPL value;
receiving, from the first device, a second message including a first TPL value; and
stopping a transmission of a third message including information related to the object, based on the first TPL value being less than the second TPL value.

**18.** A second device adapted to perform wireless communication, the second device comprising:

at least one transceiver;
at least one processor; and
at least one memory connected to the at least one processor and storing instructions that, based on being executed, cause the second device to perform operations comprising:

detecting an object;
obtaining a second transmission persistence level (TPL) value related to the object;
transmitting, to a first device, a first message including the second TPL value;
receiving, from the first device, a second message including a first TPL value; and
stopping a transmission of a third message including information related to the object, based on the first TPL value being less than the second TPL value.

**19.** A processing device adapted to control a second device to perform wireless communication, the processing device comprising:

at least one processor; and
at least one memory connected to the at least one processor and storing instructions that, based on being executed, cause the at least one processor to perform operations comprising:

detecting an object;
obtaining a second transmission persistence level (TPL) value related to the object;
transmitting, to a first device, a first message including the second TPL value;
receiving, from the first device, a second message including a first TPL value; and
stopping a transmission of a third message including information related to the object, based on the first TPL value being less than the second TPL value.

**20.** A non-transitory computer-readable storage medium recording instructions, the instruction, when executed, cause a second device to perform operations comprising:

detecting an object;
obtaining a second transmission persistence level (TPL) value related to the object;
transmitting, to a first device, a first message including the second TPL value;
receiving, from the first device, a second message including a first TPL value; and
stopping a transmission of a third message including information related to the object, based on the first TPL value being less than the second TPL value.

FIG. 1

# FIG. 2

# FIG. 3

: connected

VRU #1

VRU #2

vehicle #1

VRU #3

vehicle #3

vehicle #2

# FIG. 4

🛜 : connected

unconnected vehicle
(410)

HV B
(430)

HV A
(420)

surrogate message transmitted
from HV A
(440)

EP 4 773 709 A1

# FIG. 5

surrogate message of unconnected vehicle
transmitted from HV A with TPL
(521)

((·  : connected

unconnected vehicle
(510)

HV A
(520)

# FIG. 6

surrogate message of unconnected vehicle
transmitted from HV A with TPL
(621)

📶 : connected

HV A
(620)

unconnected vehicle
(610)

HV B
(630)

surrogate message of unconnected vehicle
transmitted from HV B with TPL
(631)

EP 4 773 709 A1

# FIG. 7

🛜 : connected

RSU — 720

road work
(710)

vehicle B
(740)

vehicle A
(730)

# FIG. 8

road work

RSU — 810

📶 : connected

DENM/RSA

vehicle B
(822)

vehicle D
(824)

vehicle A
(821)

vehicle C
(823)

vehicle E
(825)

EP 4 773 709 A1

# FIG. 9

for a priority configuration to select transmitter,
evaluating a transmission persistence level (TPL)
considering the relationship between source of
information and transmission candidate and situation ⌇S910

(if receiving a message for source of information)
comparing TPL of other transmitter and its own TPL ⌇S920

after comparing the TPLs of plurality of
transmission candidate, determining whether
to transmit or stop transmitting information message ⌇S930

# FIG. 10

UE 1

UE 2

detect an object ～S1010

calculate TPL value representing correlation between
the detected object and each UE ～S1020

receive a message including TPL value of UE 2 ～S1030

compare TPL value of UE 1
and TPL value of UE 2 ～S1040

transmit a message including the TPL value of UE 1,
based on the TPL value of
UE 1 being less than the TPL value of UE 2 ～S1050

stop the transmission
of the surrogate message ～S1060

EP 4 773 709 A1

# FIG. 11

detecting an object — S1110

obtaining a first TPL value related to the object — S1120

receiving, from a second device, a first message including a second TPL value related to the object — S1130

determining whether to transmit a second message including information related to the object, based on the first TPL value and the second TPL value — S1140

# FIG. 12

detecting an object — S1210

obtaining a second TPL value related to the object — S1220

transmitting, to a first device, a first message including the second TPL value — S1230

receiving, from the first device, a second message including a first TPL value — S1240

stopping a transmission of a third message including information related to the object, based on the first TPL value being less than the second TPL value — S1250

# FIG. 13

1

EP 4 773 709 A1

# FIG. 14

EP 4 773 709 A1

# FIG. 15

1000(102/106, 202/206)

codewords

layers

antenna ports

| | | | | | |
|---|---|---|---|---|---|
| 1010 | 1020 | 1030 | 1040 | 1050 | 1060 |
| Scrambler | Modulator | Layer Mapper | Precoder | Resource Mapper | Signal Generator |
| Scrambler | Modulator | | | Resource Mapper | Signal Generator |
| 1010 | 1020 | | | 1050 | 1060 |

# FIG. 16

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 17

100

140a

Power supply unit

108

110

Communication
unit

120

Control unit

130

Memory unit

140c

I/O unit

Display

140d

Interface unit

140b

35

# FIG. 18

## INTERNATIONAL SEARCH REPORT

| International application No. |
| --- |
| **PCT/KR2024/012922** |

| A. | CLASSIFICATION OF SUBJECT MATTER |
| --- | --- |

**H04W 72/566**(2023.01)i; **H04W 72/51**(2023.01)i; **H04W 4/40**(2018.01)i; **H04W 4/12**(2009.01)i; **H04W 4/38**(2018.01)i

According to International Patent Classification (IPC) or to both national classification and IPC

| B. | FIELDS SEARCHED |
| --- | --- |

Minimum documentation searched (classification system followed by classification symbols)

H04W 72/566(2023.01); G07C 5/00(2006.01); G08G 1/0967(2006.01); H04W 4/40(2018.01); H04W 4/46(2018.01); H04W 40/22(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: TPL(transmission persistence level), message, transmission, stop, object, detect

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2020-0394851 A1 (SAMSUNG ELECTRONICS CO., LTD.) 17 December 2020 (2020-12-17) <br> See paragraphs [0123]-[0203]; and figures 7-15. | 1-20 |
| A | US 2016-0086487 A1 (INTERNATIONAL BUSINESS MACHINES CORPORATION) 24 March 2016 (2016-03-24) <br> See paragraphs [0023]-[0079]; and figures 2-4. | 1-20 |
| A | US 2022-0272718 A1 (HYUNDAI MOBIS CO., LTD.) 25 August 2022 (2022-08-25) <br> See paragraphs [0050]-[0071]; and figures 2 and 5. | 1-20 |
| A | US 2020-0394910 A1 (DENSO INTERNATIONAL AMERICA, INC.) 17 December 2020 (2020-12-17) <br> See paragraphs [0048]-[0049]; and figure 5. | 1-20 |
| A | WO 2019-209032 A1 (LG ELECTRONICS INC.) 31 October 2019 (2019-10-31) <br> See paragraphs [0085]-[0217]; and figures 8-16b. | 1-20 |

☐ Further documents are listed in the continuation of Box C.  ☑ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **04 December 2024** | **04 December 2024** |

| Name and mailing address of the ISA/KR | Authorized officer |
| --- | --- |
| **Korean Intellectual Property Office** <br> **Government Complex-Daejeon Building 4, 189 Cheongsa-** <br> **ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/012922**

| Patent document cited in search report | | | Publication date (day/month/year) | Patent family member(s) | | | Publication date (day/month/year) |
|---|---|---|---|---|---|---|---|
| US | 2020-0394851 | A1 | 17 December 2020 | CN | 111052771 | A | 21 April 2020 |
| | | | | CN | 111052771 | B | 18 January 2022 |
| | | | | CN | 114222250 | A | 22 March 2022 |
| | | | | EP | 3643091 | A1 | 29 April 2020 |
| | | | | KR | 10-2019-0032090 | A | 27 March 2019 |
| | | | | KR | 10-2334318 | B1 | 03 December 2021 |
| | | | | US | 10755491 | B2 | 25 August 2020 |
| | | | | US | 11341784 | B2 | 24 May 2022 |
| | | | | US | 2019-0088041 | A1 | 21 March 2019 |
| | | | | WO | 2019-059618 | A1 | 28 March 2019 |
| US | 2016-0086487 | A1 | 24 March 2016 | US | 10319230 | B2 | 11 June 2019 |
| US | 2022-0272718 | A1 | 25 August 2022 | CN | 104683427 | A | 03 June 2015 |
| | | | | CN | 104683427 | B | 24 August 2018 |
| | | | | EP | 2879108 | A1 | 03 June 2015 |
| | | | | EP | 2879108 | B1 | 06 March 2019 |
| | | | | KR | 10-1506598 | B1 | 27 March 2015 |
| | | | | US | 10425960 | B2 | 24 September 2019 |
| | | | | US | 11153894 | B2 | 19 October 2021 |
| | | | | US | 11350430 | B2 | 31 May 2022 |
| | | | | US | 11357023 | B2 | 07 June 2022 |
| | | | | US | 11617201 | B2 | 28 March 2023 |
| | | | | US | 11665729 | B2 | 30 May 2023 |
| | | | | US | 2015-0156662 | A1 | 04 June 2015 |
| | | | | US | 2016-0316486 | A1 | 27 October 2016 |
| | | | | US | 2018-0184442 | A1 | 28 June 2018 |
| | | | | US | 2020-0022159 | A1 | 16 January 2020 |
| | | | | US | 2021-0120568 | A1 | 22 April 2021 |
| | | | | US | 2021-0120569 | A1 | 22 April 2021 |
| | | | | US | 2022-0264594 | A1 | 18 August 2022 |
| | | | | US | 9392486 | B2 | 12 July 2016 |
| | | | | US | 9907086 | B2 | 27 February 2018 |
| US | 2020-0394910 | A1 | 17 December 2020 | US | 11094192 | B2 | 17 August 2021 |
| WO | 2019-209032 | A1 | 31 October 2019 | US | 11758377 | B2 | 12 September 2023 |
| | | | | US | 2021-0112386 | A1 | 15 April 2021 |

Form PCT/ISA/210 (patent family annex) (July 2022)